# EUROPEAN PATENT SPECIFICATION

(11) **EP 1 653 311 B1**
(45) Date of publication and mention of the grant of the patent: **27.02.2019**
(21) Application number: 04105365.3
(22) Date of filing: 28.10.2004
(51) Int. Cl.: F01P 5/10

(54) **Device for automatically regulating flow rate and circuit comprising a device of this kind**
Vorrichtung zum automatischen Regeln eines Durchflusses und Kreislauf mit einer Vorrichtung dieser Art
Dispositif pour réguler automatiquement un débit et circuit comprenant un dispositif de ce type

(43) Date of publication of application: 03.05.2006
(73) Proprietor: Mark IV Systemes Moteurs (Société Anonyme), 92400 Courbevoie (FR); Bayerische Motoren Werke Aktiengesellschaft, 80809 München (DE)
(72) Inventor: Alves, Anthony, 67200 Strasbourg (FR)
(74) Representative: Bergadano, Mirko

(56) References cited:
- DE-A1- 10 311 188
- DE-C- 282 091
- US-A- 635 829
- US-A- 2 415 674
- US-A- 3 958 605
- US-A- 4 633 900
- PATENT ABSTRACTS OF JAPAN vol. 007, no. 153 (M-226), 5 July 1983 (1983-07-05) & JP 58 061371 A (MASAMICHI KANEDA), 12 April 1983 (1983-04-12)

## Description

The present invention concerns the regulation of the circulation of a fluid in a conduit, more particularly the regulation of the flow rate of a liquid, and relates to a device for automatically regulating flow rate, as well as to a circuit comprising a device of this kind.

There are already numerous systems for regulating flow rate, which generally have one or more of the following drawbacks: insufficiently precise regulation, all-or-nothing regulation, inadequate performance reliability, an excessively complex and/or bulky structure, and an exorbitant price.

This is particularly true of regulating systems that are currently used in the cooling circuits of vehicles with thermal engines.

DE-A-103-11-188 discloses a systeme comprising a pump according to the preamble of claim 1.

The object of the present invention is to overcome the aforementioned drawbacks of currently known systems.

For this purpose, it relates to a device for automatically regulating the flow rate in a conduit portion crossed by a liquid flow, comprising a regulating member, mounted with a facility for limited pivoting or sliding in said portion, and an assembly for controlling the position of said member, the device being characterised in that said control assembly comprises a calibrated actuating component mounted with a facility for displacement in the conduit portion and exposed to the liquid flow by displaying a given exposed surface; a position control mechanism connecting the actuating component and the regulating member, and an elastic-action means, urging the actuating component, directly or indirectly, toward a position corresponding to a maximum open position of the regulating member, counter to the force generated by the pressure of the liquid flow on said component.

A better understanding of the invention will be facilitated by the following description, which relates to preferred embodiments, given by way of non-limiting examples and explained with reference to the accompanying schematic drawings, in which:
Fig. 1A and 1B are side elevational and partially sectional side views of a first variant of a first embodiment of the invention, the regulating device being in two different states (maximum open/almost closed);
Fig. 2A and 2B are views, similar to those of Fig. 1A and 1B, of a second variant of a first embodiment of the invention, the regulating device being in two different states;
Fig. 3 is a schematic, side view of a second embodiment of the invention;
Fig. 4 is an exploded, perspective view of a third embodiment of the regulating device according to the invention, together with a pump case part;
Fig. 5 is a perspective view of the device of Fig. 4, seen in a different direction and after its assembly in a pump case part;
Fig. 6 is a perspective view of the regulating device of Figs. 4 and 5, shown together with the complementary case part, this pump case part being incorporated into or connected to another element;
Fig. 7 is a perspective view of a pump formed by assembling the two case parts of Figs. 6 and 7;
Fig. 8 is a graph illustrating the development of the applied torque as a function of rotational speed, for a pump of the type shown in Fig. 7, without (unbroken line) and with (broken line) a regulating device according to the invention; and
Fig. 9 is a graph illustrating the development of the flow rate as a function of rotational speed, for a pump of the type shown in Fig. 7, without (unbroken line) and with (broken line) a regulating device according to the invention.

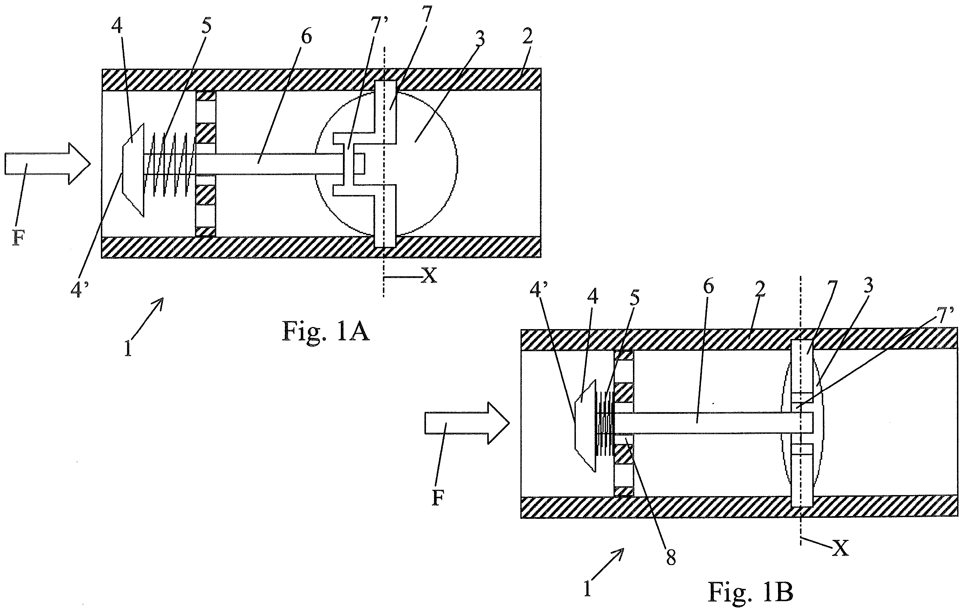

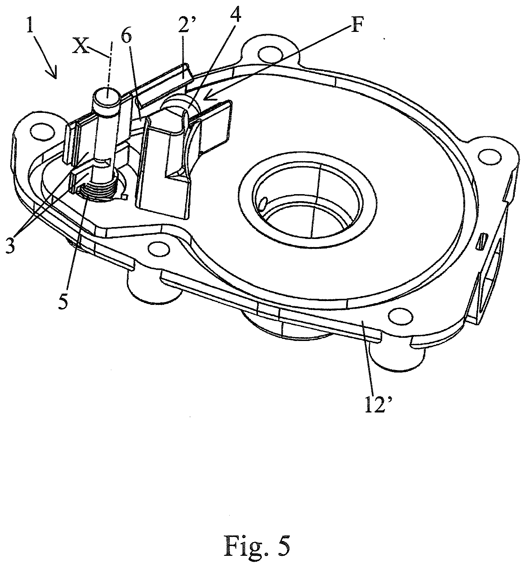

As shown in Figs. 1 to 6 of the accompanying drawings, the device 1 for automatically regulating the flow rate in a conduit portion 2 crossed by a liquid flow F substantially comprises a regulating member 3, which is mounted with a facility for limited pivoting or sliding in said portion 2, and an assembly for controlling the position of said member.

According to the invention, said control assembly substantially comprises, firstly, a calibrated actuating component 4, mounted with a facility for displacement in the conduit portion 2 and exposed to the liquid flow F by displaying a given exposed surface, secondly, a position control mechanism 6, 7; 6, 7" connecting the actuating component 4 and the regulating member 3 and, finally, an elastic-action means 5, urging the actuating component 4, directly or via the aforementioned mechanism 6, 7; 5, 7", toward a position corresponding to a maximum open position of the regulating member 3, counter to the force generated by the pressure resulting from the liquid flow F acting on said component 4.

The characteristics of the regulation of flow rate in the conduit portion 2 will, of course, be dependent on a plurality of parameters, i.e. the characteristics of the action of the flow F on the component 4, and therefore of the resulting thrust, the characteristics of the means 5 acting against the action of the flow F, the effect of the regulating member 3 on the flow rate and the flow F, and therefore indirectly on the resulting thrust in the region of the component 4, and also the resistance of the movement resulting from friction in the region of the various components of the mechanism 6, 7; 6, 7".

In specific applications, it is advantageous to be able to define two liquid-circulation modes, corresponding to two operating states of the regulating device 1, i.e. a first state, in which said device 1 does not perform any active regulation, and a second state, in which active regulation, if possible with automatic control, is performed by said device 1.

According to the invention, it may therefore advantageously be provided that the characteristic of the elastic-action means 5, on the one hand, and the outer shape and the exposed surface in the direction of the flow F of the actuating component 4, on the other hand, are mutually adapted and dimensioned such that the regulating member 3 is held in the maximum open position for as long as the flow rate in the conduit portion 2 in question is below a predefined threshold value VS, and that said regulating member 3 is displaced outside of this position when said flow rate reaches or exceeds this threshold value VS, said device 1 tending automatically to become stabilised in a given equilibrium position that is particular to each flow rate variation, for flow rate values above said threshold value VS.

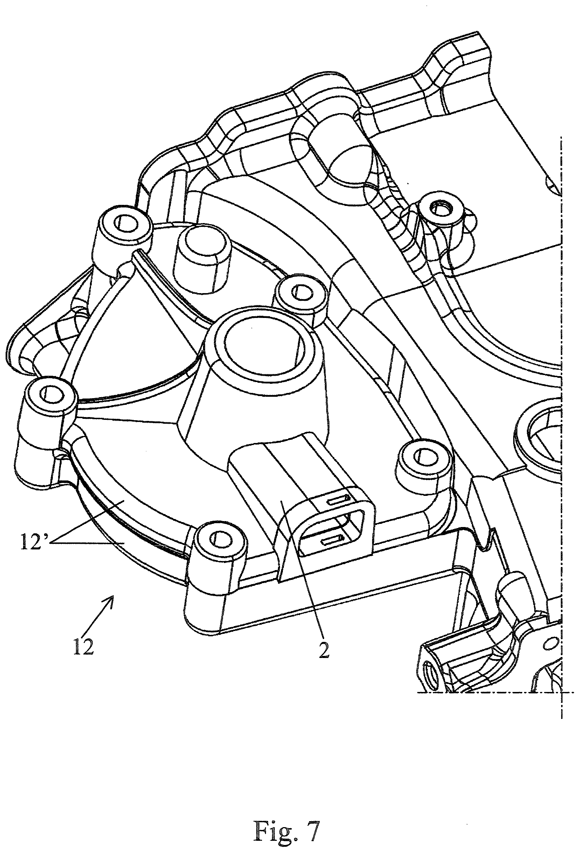

According to a first characteristic of the invention, emerging from Figs. 1 to 7 of the accompanying drawings, the actuating component 4 is mounted in the conduit portion 2 with a facility for sliding in the direction of the flow F, and the position control mechanism 6, 7 comprises a joint that transforms the translational movement of the actuating component 4 into a rotational movement in the region of the rotatory regulating member 3.

According to one characteristic of the invention, the component 4 is advantageously integral, and preferably formed in a single piece, with at least one rod 6 or the like that is displaced in translation under the effect of said component 4, said rod 6 being connected in an articulated manner to an assembly site 10, 7' that is integral either with the assembly and/or control shaft of the regulating member 3 or with the member 3 itself, by being radially offset relative to the pivoting axis X of said member 3.

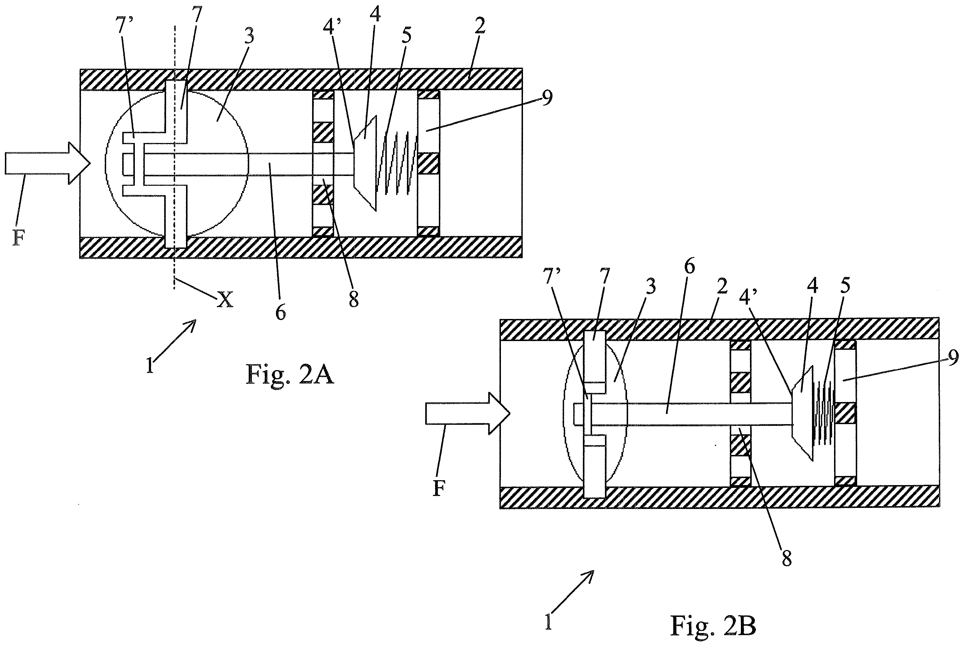

According to one embodiment of the invention, the actuating component 4 is integral with at least one rod 6 or similar elongated element that is guided in translation, in a loose manner, in the direction of the flow F, and the position control mechanism is a movement-transformation mechanism of the connecting rod/crankshaft type, wherein the connecting rod is formed by said at least one rod 6 and the crankshaft 7 forms the assembly and/or position control shaft of the regulating member 3, or at least a part 7' of such a shaft (Fig. 1 and 2).

Advantageously, the regulating member 3 may be a pivoting valve with a substantially flat body, which is capable of being displaced between a maximum open position, in which said valve 3 is disposed edgewise in the conduit portion 2, and a closed position, in which said valve 3 blocks, entirely or in part, said conduit portion 2.

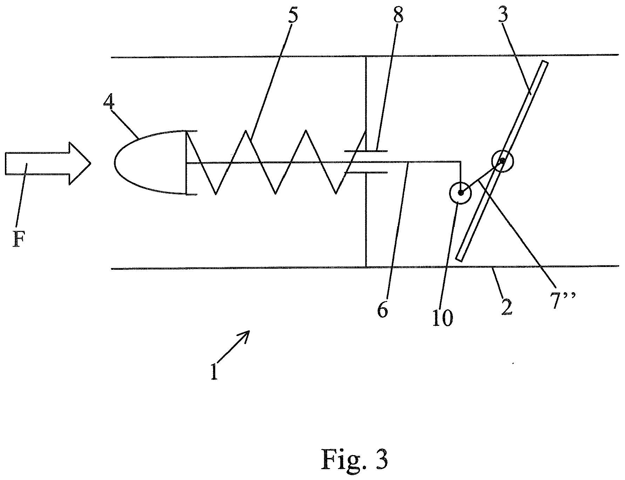

In a variant, the movement-transformation mechanism may also be a ball joint or a joint having an axis of rotation between an arm laterally extending the free end of the rod 6 and a manoeuvring arm 7" that is integral with the body of the valve 3, said valve being mounted in a pivoting manner on a spin shaft (Fig. 3), and the rod 6 and the arm 7" being connected to each other in the region of an assembly site 10.

In order to limit disruptions of the liquid flow and passage, the component 4 may have a tapered or rounded structure in the direction opposite the direction of the flow F of liquid into the conduit portion 2.

According to another characteristic of the invention, the actuating component 4 has, at least in part, one of the following shapes: truncated, ogival, elliptical, spherical or hemispherical, optionally with a flattened front face 4'.

This face 4' will allow the characteristic of the thrust to be defined as a function of the flow rate, in a precise and simple manner.

The displacement of the component 4, and therefore of the regulating member 3, may optionally be limited by means of opposing stops, provided in the conduit portion 2 or on or around the pivoting axis of the member 3, wherein these stops should influence the flow of the fluid as little as possible.

According to a first variation of the invention, and as shown in Figs. 1 and 3 of the accompanying drawings, the actuating component 4 is located upstream of the regulating member 3, the elastic-action means 5 being a compression spring pushing against the back of said component 4 and resting on the or a bearing 8 for guiding said component 4 or a part 6 of the position control mechanism 6, 7; 6, 7".

According to a second variation, shown in Fig. 2 of the accompanying drawings, the actuating component 4 is located downstream of the regulating member 3, the elastic-action means 5 being a compression spring pushing against the back of said component 4 and resting on a second bearing 9, located downstream of the or a bearing 8 for guiding said component 4 or a part 6 of the position control mechanism 6, 7; 6, 7".

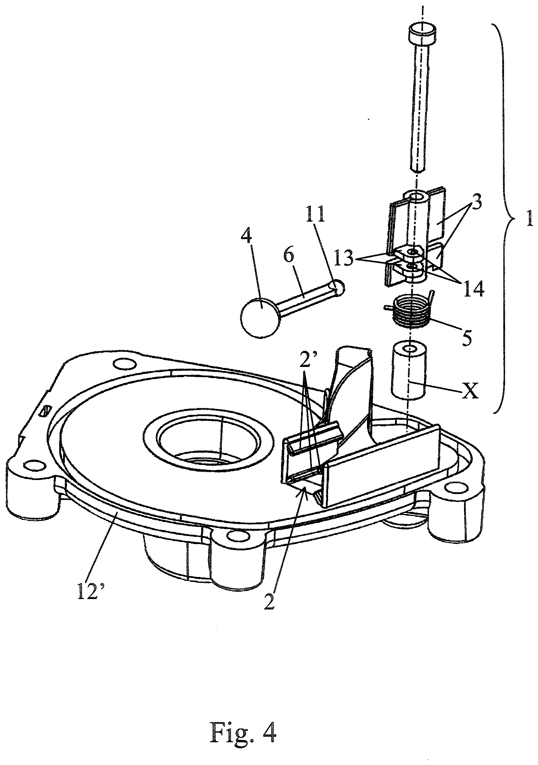

According to a third embodiment of the invention, emerging from Figs. 4 to 6 of the accompanying drawings, the elastic-action means 5 is a torsion spring, acting in compression or in traction, mounted concentrically with the pivoting axis X of the regulating member 3 and urging said member in rotation toward its maximum open position.

In this embodiment, the component 4 may also be located upstream or downstream of the member 3.

According to a practical variation of this third embodiment, the actuating component 4 is guided, in a loose manner, in the conduit portion 2 by linear guides 2' extending in the longitudinal direction of said portion 2, and the rod 6 extending said component 4 comprises, at its other end, a ball 11 or a similar spherical component that is received in an articulated manner in the radially offset assembly site 10, said site preferably being of a piece with the component 3 or the assembly shaft thereof (Fig. 4 to 6).

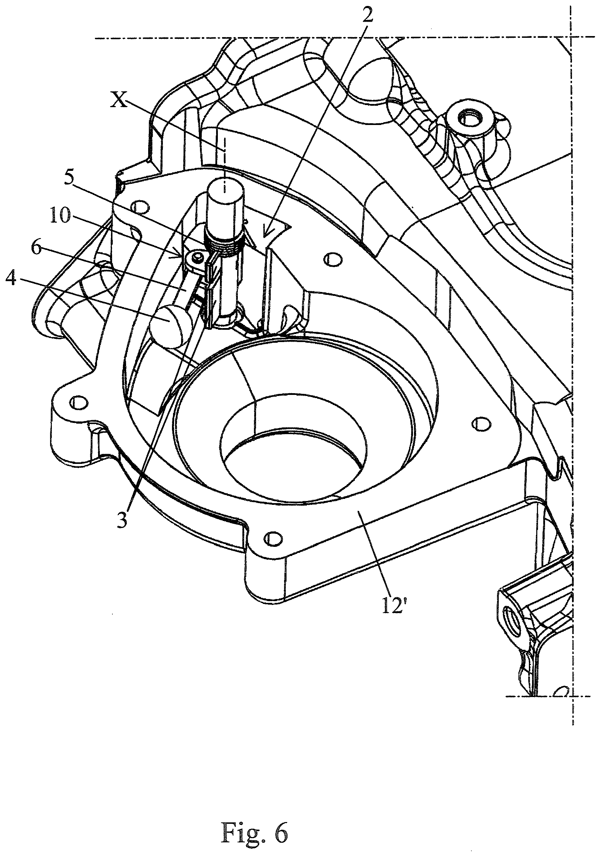

As shown in Figs. 4 and 6 of the accompanying drawings, the articulated assembly site 10 may be formed by two parallel and spaced wings or lugs 13, formed on the member 3 and provided with opposing orifices or cavities 14 for receiving the spherical end or ball 11, these wings also defining a slot for partially guiding the rod 6, with clearance.

The invention also relates to a liquid fluid-circulation circuit comprising at least one pump 12, characterised in that it comprises a regulating device 1 of the aforementioned type, mounted in the region of the orifice or the outlet conduit of said pump 12 or in a conduit portion following this outlet.

Advantageously, the cooling circuit may be a cooling circuit of an internal-combustion engine of a motor vehicle.

Finally, the invention also relates to a fluid-circulation pump 12 comprising a pump case defining an outlet or discharge conduit portion, characterised in that said conduit portion 2 comprises an automatic regulating device 1 as described above.

The case or body of the pump 12 may be formed by assembling two complementary case parts 12', the regulating device 1 being mounted in one of said parts before the complementary part is attached thereto in a tight manner.

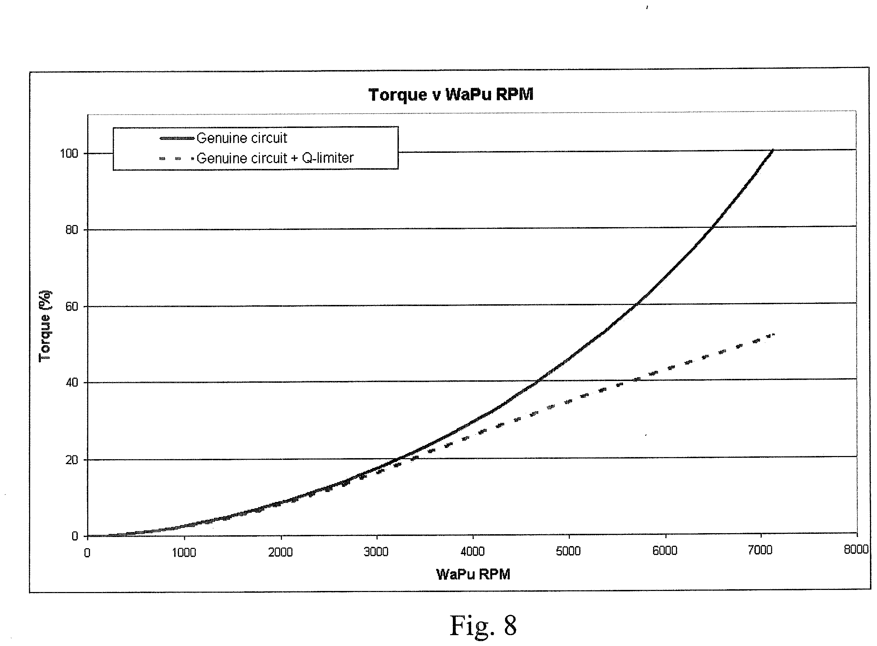

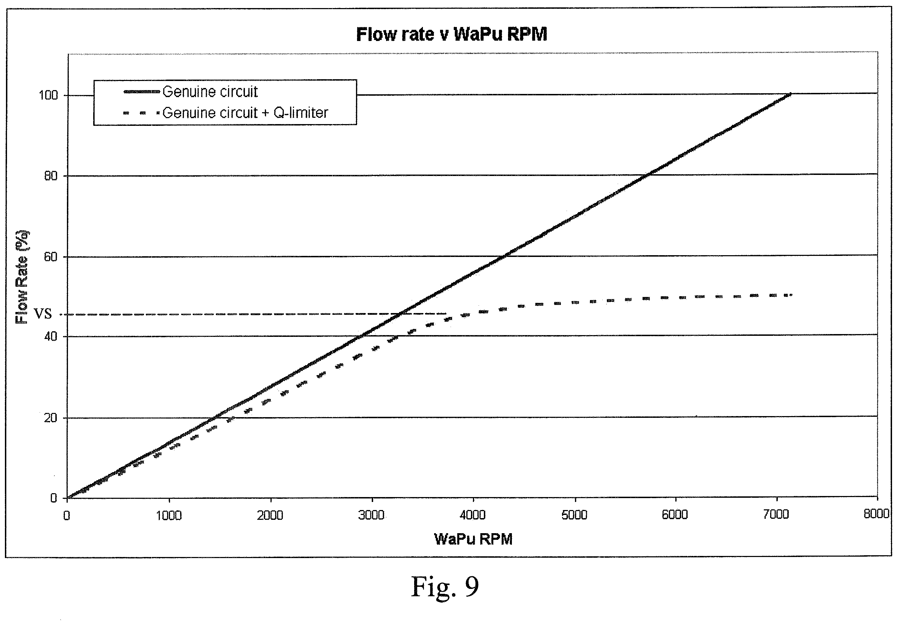

Figs. 8 and 9 illustrate in graph form the effect of the regulating device 1 when it is mounted downstream of a water pump.

Owing to its effect of limiting the flow rate, the device 1 allows the torque required for rotating the pump 12 to be limited, thus serving to limit the drive power of this pump.

As well as providing a solution to the various drawbacks of the prior art, the invention thus also allows the power consumed by the water pump to be reduced.

## Claims

1. Fluid-circulation pump (12) for a cooling circuit of an internal combustion engine of a vehicle comprising a pump case (12') defining an outlet or discharge conduit portion, said conduit portion (2) comprising a device (1) for automatically regulating the flow rate in said conduit portion (2) crossed by a liquid flow, said device comprising a regulating member, mounted with a facility for limited pivoting or sliding in said portion, and an assembly for controlling the position of said regulating member, **characterised in that** said control assembly comprises a calibrated actuating component (4) mounted with a facility for displacement in the conduit portion (2) and exposed to the liquid flow (F) by displaying a given exposed surface; a position control mechanism (6, 7; 6, 7") connecting the actuating component (4) and the regulating member (3); and an elastic-action means (5) urging the actuating component (4), directly or via the aforementioned mechanism (6, 7; 5, 7"), toward a position corresponding to a maximum open position of the regulating member (3), counter to the force generated by the pressure resulting from the liquid flow (F) acting on said component (4), and wherein the actuating component (4) is mounted in the conduit portion (2) with a facility for sliding in the direction of the flow (F), the position control mechanism (6, 7) comprises a joint that transforms the translational movement of the actuating component (4) into a rotational movement in the region of the rotatory regulating member (3).

2. Fluid-circulation pump according to claim 1, **characterised in that** the characteristic of the elastic-action means (5), on the one hand, and the outer shape and the exposed surface in the direction of the flow (F) of the actuating component (4), on the other hand, are mutually adapted and dimensioned such that the regulating member (3) is held in the maximum open position for as long as the flow rate in the conduit portion (2) in question is below a predefined threshold value (VS), and **in that** said regulating member (3) is displaced outside of this position when said flow rate reaches or exceeds this threshold value (VS), said device (1) tending automatically to become stabilised in a given equilibrium position that is particular to each flow rate variation, for flow rate values above said threshold value (VS).

3. Fluid-circulation pump according to any one of claims 1 or 2, **characterised in that** the actuating component (4) is integral with at least one rod (6) or similar elongated element that is guided in translation, in a loose manner, in the direction of the flow (F), and **in that** the position control mechanism is a movement-transformation mechanism of the connecting rod/crankshaft type, wherein the connecting rod is formed by said at least one rod (6) and the crankshaft (7) forms the assembly and/or position control shaft of the regulating member (3), or at least a part (7') of such a shaft.

4. Fluid-circulation pump e according to any one of claims 1 or 2, **characterised in that** the actuating component (4) is integral with at least one rod (6) or the like that is displaced in translation under the effect of said component (4), said rod (6) being connected in an articulated manner to an assembly site (10, 7') that is integral either with the assembly and/or control shaft of the regulating member (3) or with the member (3) itself, by being radially offset relative to the pivoting axis (X) of said member (3).

5. Fluid-circulation pump according to any one of claims 1 to 4, **characterised in that** the regulating member (3) is a pivoting valve with a substantially flat body, which is capable of being displaced between a maximum open position, in which said valve (3) is disposed edgewise in the conduit portion (2), and a closed position, in which said valve (3) blocks, entirely or in part, said conduit portion (2).

6. Fluid-circulation pump according to any one of claims 1 to 5, **characterised in that** the actuating component (4) has a tapered structure in the direction opposite the direction of the flow (F) of liquid into the conduit portion (2).

7. Fluid-circulation pump according to any one of claims 1 to 6, **characterised in that** the actuating component (4) has, at least in part, one of the following shapes: truncated, ogival, elliptical, spherical or hemispherical, optionally with a flattened front face (4').

8. Fluid-circulation pump according to any one of claims 1 to 7, **characterised in that** the actuating component (4) is located upstream of the regulating member (3), the elastic-action means (5) being a compression spring pushing against the back of said component (4) and resting on a bearing (8) for guiding said component (4) or a part (6) of the control mechanism (6, 7; 6, 7").

9. Fluid-circulation pump according to any one of claims 1 to 7, **characterised in that** the actuating component (4) is located downstream of the regulating member (3), the elastic-action means (5) being a compression spring pushing against the back of said component (4) and resting on a second bearing (9), located downstream of a bearing (8) for guiding said component (4) or a part (6) of the control mechanism (6, 7; 6, 7").

10. Fluid-circulation pump according to any one of claims 1 to 7, **characterised in that** the elastic-action means (5) is a torsion spring, mounted concentrically with the pivoting axis (X) of the regulating member (3) and urging said member in rotation toward its maximum open position.

11. Fluid-circulation pump according to claims 4 and 10, **characterised in that** the actuating component (4) is guided, in a loose manner, in the conduit portion (2) by linear guides (2') extending in the longitudinal direction of said portion (2), and **in that** the rod (6) extending said component (4) comprises, at its other end, a ball (11) or a similar spherical component that is received in an articulated manner in the radially offset assembly site (10), said site preferably being of a piece with the component (3) or the assembly shaft thereof.

12. Liquid fluid-circulation circuit for an internal combustion engine comprising at least one pump, according to any one of claims 1 to 11, wherein said device (1) is mounted in the region of the outlet orifice of said pump (12).

## Patentansprüche

1. Fluidumwälzpumpe (12) für einen Kühlkreislauf eines Verbrennungsmotors eines Fahrzeugs, mit einem Pumpengehäuse (12'), das einen Auslass- oder Ausgabeleitungsbereich bildet, wobei der Leitungsbereich (2) eine Vorrichtung (1) zum automatischen Regeln des Durchflusses in dem von einer Flüssigkeitsströmung durchquerten Leitungsbereich (2) aufweist, wobei die Vorrichtung ein Regulierelement aufweist, das in dem Bereich begrenzt schwenkbar und gleitend verschiebbar vorgesehen ist, und einer Anordnung zum Steuern der Position des Regulierungselements, **dadurch gekennzeichnet, dass** die Steueranordnung aufweist: eine kalibrierte Betätigungskomponente (4), die in dem Leitungsbereich (2) verschiebbar vorgesehen ist und der Flüssigkeitsströmung (F) durch eine gegebene freiliegende Fläche ausgesetzt ist; einen Positionssteuermechanismus (6, 7; 6, 7'), welcher die Betätigungskomponente (4) und das Regulierungselement (3) verbindet; und eine elastisch wirkende Einrichtung (5), welche die Betätigungskomponente (4) entgegen der Kraft, die durch den aus der auf die Komponente (4) einwirkenden Flüssigkeitsströmung (F) resultierenden Druck erzeugt wird, direkt oder über den genannten Mechanismus (6, 7; 6, 7') in Richtung einer Position drückt, die einer maximal geöffneten Position des Regulierungselements (3) entspricht, und wobei die Betätigungskomponente (4) in dem Leitungsbereich (2) in Richtung der Strömung (F) gleitend verschiebbar vorgesehen ist, wobei der Positionssteuermechanismus (6, 7) ein Gelenk aufweist, das die Translationsbewegung der Betätigungskomponente (4) in eine Drehbewegung im Bereich des drehenden Regulierungselements (3) umwandelt.

2. Fluidumwälzpumpe nach Anspruch 1, **dadurch gekennzeichnet, dass** die Kennlinie der elastisch wirkenden Einrichtung (5) einerseits und die äußere Form und die in Richtung der Strömung (F) freiliegende Fläche der Betätigungskomponente (4) andererseits aneinander angepasst und derart bemessen sind, dass das Regulierungselement (3) so lange in der maximal geöffneten Position gehalten wird wie der Durchfluss in dem betreffenden Leitungsbereich (2) unter einem vordefinierten Schwellenwert (VS) liegt, und dass das Regulierungselement (3) außerhalb dieser Position angeordnet ist, wenn der Durchfluss diesen Schwellenwert (VS) erreicht oder übersteigt, wobei die Vorrichtung (1) automatisch dazu neigt, sich bei Durchflusswerten über dem Schwellenwert (SV) in einer gegebenen Gleichgewichtsposition zu stabilisieren, die für jede Durchflussveränderung kennzeichnend ist.

3. Fluidumwälzpumpe nach einem der Ansprüche 1 oder 2, **dadurch gekennzeichnet, dass** die Betätigungskomponente (4) einstückig mit mindestens einer Stange (6) oder einem ähnlichen langgestreckten Element ausgebildet ist, das in loser Weise translatorisch in der Richtung der Strömung (F) geführt ist, und dass der Positionssteuermechanismus ein Bewegungsumsetzungsmechanismus ist von Typ Pleuelstange/Kurbelwelle ist, wobei die Pleuelstange durch die mindestens eine Stange (6) gebildet ist, und die Kurbelwelle (7) die Montage- und/oder die Positionssteuerwelle des Regulierungselements (3) oder zumindest einen Teil (7') einer solchen Welle bildet.

4. Fluidumwälzpumpe nach einem der Ansprüche 1 oder 2, **dadurch gekennzeichnet, dass** die Betätigungskomponente (4) einstückig mit mindestens einer Stange oder dergleichen ausgebildet ist, die unter Einwirkung der Komponente (4) translatorisch verschoben wird, wobei die Stange (6) gelenkig mit einer Montagestelle (10, 7') verbunden ist, die entweder mit der Montage- und/oder der Steuerwelle des Regulierungselements (3) oder mit dem Element (3) einstückig ausgebildet ist, indem sie in Bezug auf die Schwenkachse (X) des Elements (3) radial versetzt ist.

5. Fluidumwälzpumpe nach einem der Ansprüche 1 bis 4, **dadurch gekennzeichnet, dass** das Regulierungselement (3) ein Gelenkventil mit einem im Wesentlichen ebenen Körper ist, das zwischen einer maximal geöffneten Position, in welcher das Ventil (3) mit der Schmalseite voran im Leitungsabschnitt (2) angeordnet ist, und eine geschlossenen Position bewegbar ist, in welcher das Ventil (3) den Leitungsabschnitt (2) ganz oder teilweise sperrt.

6. Fluidumwälzpumpe nach einem der Ansprüche 1 bis 5, **dadurch gekennzeichnet, dass** die Betätigungskomponente (4) eine Struktur aufweist, die sich in die der Richtung der Strömung (F) der Flüssigkeit in den Leitungsbereich (2) entgegengesetzte Richtung verjüngt.

7. Fluidumwälzpumpe nach einem der Ansprüche 1 bis 6, **dadurch gekennzeichnet, dass** die Betätigungskomponente (4) zumindest teilweise eine der folgenden Formen aufweist: kegelstumpfförmig, spitzoval, elliptisch, kugelförmig oder halbkugelförmig, optional mit abgeflachter Vorderseite (4').

8. Fluidumwälzpumpe nach einem der Ansprüche 1 bis 7, **dadurch gekennzeichnet, dass** die Betätigungskomponente (4) stromaufwärts des Regulierungselements (3) angeordnet ist, wobei die elastisch wirkende Einrichtung (5) eine Druckfeder ist, die gegen die Rückseite der Komponente (4) drückt und an einem Lager (8) zum Führen der Komponente (4) oder eines Teils (6) des Steuermechanismus (6, 7; 6, 7') anliegt.

9. Fluidumwälzpumpe nach einem der Ansprüche 1 bis 7, **dadurch gekennzeichnet, dass** die Betätigungskomponente (4) stromabwärts des Regulierungselements (3) angeordnet ist, wobei die elastisch wirkende Einrichtung (5) eine Druckfeder ist, die gegen die Rückseite der Komponente (4) drückt und an einem zweiten Lager (9) anliegt, das stromabwärts eines Lagers (8) zum Führen der Komponente (4) oder eines Teils (6) des Steuermechanismus (6, 7; 6, 7') angeordnet ist.

10. Fluidumwälzpumpe nach einem der Ansprüche 1 bis 7, **dadurch gekennzeichnet, dass** die elastisch wirkende Einrichtung (5) eine Torsionsfeder ist, die zur Schwenkachse (X) des Regulierungselements (3) konzentrisch angebracht ist und das Element drehend in Richtung seiner maximal geöffneten Position drückt.

11. Fluidumwälzpumpe nach einem der Ansprüche 4 und 10, **dadurch gekennzeichnet, dass** die Betätigungskomponente (4) lose in dem Leitungsbereich (2) durch lineare Führungen (2') geführt ist, die sich in Längsrichtung des Bereichs (2) erstrecken, und dass die Stange (6), welche die Komponente (4) verlängert, an ihrem anderen Ende eine Kugel (11) oder eine ähnliche kugelförmige Komponente aufweist, die gelenkig in der radial versetzten Montagestelle (10) aufgenommen ist, wobei die Stelle vorzugsweise einstückig mit der Komponente (3) oder der Montagewelle derselben ist.

12. Fluidumwälzkreislauf für einen Verbrennungsmotor mit mindestens einer Pumpe nach einem der Ansprüche 1 bis 11, bei welchem die Vorrichtung (1) im Bereich der Auslassöffnung der Pumpe (12) angebracht ist.

## Revendications

1. Pompe de circulation de fluide (12) pour un circuit de refroidissement d'un moteur à combustion interne d'un véhicule, laquelle pompe comprend un corps de pompe (12') qui définit une section de conduit de sortie ou décharge, ladite section de conduit (2) comprenant un dispositif (1) pour réguler automatiquement le débit d'écoulement dans ladite section de conduit (2) qui est parcourue par un écoulement de liquide, ledit dispositif comprenant un élément de régulation, qui est monté avec un moyen pour assurer un pivotement ou un coulissement limité dans ladite section, et un assemblage pour commander la position dudit élément de régulation, **caractérisée en ce que** ledit assemblage de commande comprend un composant d'actionnement étalonné (4) qui est monté avec un moyen pour assurer un déplacement dans la section de conduit (2) et qui est exposé à l'écoulement de liquide (F) en présentant une surface exposée donnée ; un mécanisme de commande de position (6, 7 ; 6, 7") qui connecte le composant d'actionnement (4) et l'élément de régulation (3) ; et un moyen d'action élastique (5) qui sollicite par poussée le composant d'actionnement (4), directement ou via le mécanisme (6, 7 ; 6, 7") mentionné ci-avant, en direction d'une position qui correspond à une position d'ouverture maximum de l'élément de régulation (3), à l'encontre de la force qui est générée par la pression qui résulte de l'action de l'écoulement de liquide (F) sur ledit composant (4), et dans lequel le composant d'actionnement (4) est monté dans la section de conduit (2) avec un moyen pour assurer un coulissement dans la direction de l'écoulement (F), le mécanisme de commande de position (6, 7) comprend une jonction qui transforme le déplacement en translation du composant d'actionnement (4) selon un déplacement en rotation dans la région de l'élément de régulation rotatif (3).

2. Pompe de circulation de fluide selon la revendication 1, **caractérisée en ce que** la caractéristique du moyen d'action élastique (5), d'une part, et la forme externe ainsi que la surface exposée dans la direction de l'écoulement (F) du composant d'actionnement (4), d'autre part, sont adaptées et dimensionnées de façon mutuelle de telle sorte que l'élément de régulation (3) soit maintenu dans la position d'ouverture maximum aussi longtemps que le débit d'écoulement dans la section de conduit (2) en question est en-deçà d'une valeur de seuil prédéfinie (VS), et **en ce que** ledit élément de régulation (3) est déplacé à l'extérieur de cette position lorsque ledit débit d'écoulement atteint ou excède cette valeur de seuil (VS), ledit dispositif (1) tendant automatiquement à devenir stabilisé dans une position d'équilibre donnée qui est particulière à chaque variation de débit d'écoulement, pour des valeurs de débit d'écoulement au-delà de ladite valeur de seuil (VS).

3. Pompe de circulation de fluide selon l'une quelconque des revendications 1 ou 2, **caractérisée en ce que** le composant d'actionnement (4) est d'un seul tenant avec au moins une tige (6) ou un élément allongé similaire qui est guidé en translation, d'une manière lâche, dans la direction de l'écoulement (F), et **en ce que** le mécanisme de commande de position est un mécanisme de transformation de déplacement du type tige de connexion ou bielle/vilebrequin, dans lequel la tige de connexion est formée par ladite au moins une tige (6), et le vilebrequin (7) forme l'arbre d'assemblage et/ou de commande de position de l'élément de régulation (3), ou au moins une partie (7') de cet arbre.

4. Pompe de circulation de fluide selon l'une quelconque des revendications 1 ou 2, **caractérisée en ce que** le composant d'actionnement (4) est d'un seul tenant avec au moins une tige (6) ou similaire qui est déplacée en translation sous l'effet dudit composant (4), ladite tige (6) étant connectée d'une manière articulée à un site d'assemblage (10, 7') qui est d'un seul tenant soit avec l'arbre d'assemblage et/ou de commande de position de l'élément de régulation (3), soit avec l'élément de régulation (3) lui-même, en étant décalé radialement par rapport à l'axe de pivotement (X) dudit élément (3).

5. Pompe de circulation de fluide selon l'une quelconque des revendications 1 à 4, **caractérisée en ce que** l'élément de régulation (3) est une soupape pivotante qui présente un corps sensiblement plat, laquelle peut être déplacée entre une position d'ouverture maximum, dans laquelle ladite soupape (3) est disposée latéralement dans la section de conduit (2), et une position de fermeture, dans laquelle ladite soupape (3) bloque, en totalité ou en partie, ladite section de conduit (2).

6. Pompe de circulation de fluide selon l'une quelconque des revendications 1 à 5, **caractérisée en ce que** le composant d'actionnement (4) comporte une structure conique dans la direction opposée à la direction de l'écoulement (F) de liquide à l'intérieur de la section de conduit (2).

7. Pompe de circulation de fluide selon l'une quelconque des revendications 1 à 6, **caractérisée en ce que** le composant d'actionnement (4) présente, au moins en partie, l'une des formes qui suivent : tronquée, ogivale, elliptique, sphérique et hémisphérique, en option avec une face avant aplatie (4').

8. Pompe de circulation de fluide selon l'une quelconque des revendications 1 à 7, **caractérisée en ce que** le composant d'actionnement (4) est localisé en amont de l'élément de régulation (3), le moyen d'action élastique (5) étant un ressort de compression qui exerce une poussée contre l'arrière dudit composant (4) et qui repose sur un palier (8) pour guider ledit composant (4) ou une partie (6) du mécanisme de commande (6, 7 ; 6, 7").

9. Pompe de circulation de fluide selon l'une quelconque des revendications 1 à 7, **caractérisée en ce que** le composant d'actionnement (4) est localisé en aval de l'élément de régulation (3), le moyen d'action élastique (5) étant un ressort de compression qui exerce une poussée contre l'arrière dudit composant (4) et qui repose sur un second palier (9), localisé en aval d'un palier (8) pour guider ledit composant (4) ou une partie (6) du mécanisme de commande (6, 7 ; 6, 7").

10. Pompe de circulation de fluide selon l'une quelconque des revendications 1 à 7, **caractérisée en ce que** le moyen d'action élastique (5) est un ressort de torsion, qui est monté de façon concentrique par rapport à l'axe de pivotement (X) de l'élément de régulation (3) et qui sollicite par poussée ledit élément en rotation en direction de sa position d'ouverture maximum.

11. Pompe de circulation de fluide selon les revendications 4 et 10, **caractérisée en ce que** le composant d'actionnement (4) est guidé, d'une manière lâche, dans la section de conduit (2) au moyen de guides linéaires (2') qui s'étendent dans la direction longitudinale de ladite section (2), et **en ce que** la tige (6) qui prolonge ledit composant (4) comprend, au niveau de son autre extrémité, une bille (11) ou un composant sphérique similaire qui est reçu d'une manière articulée dans le site d'assemblage décalé radialement (10), ledit site étant de préférence d'une seule pièce avec le composant (3) ou son arbre d'assemblage.

12. Circuit de circulation de fluide liquide pour un moteur à combustion interne qui comprend au moins une pompe, selon l'une quelconque des revendications 1 à 11, dans lequel ledit dispositif (1) est monté dans la région de l'orifice de sortie de ladite pompe (12).
